# EUROPEAN PATENT SPECIFICATION

(11) **EP 4 460 087 B1**
(45) Date of publication and mention of the grant of the patent: **23.04.2025**
(21) Application number: 23171685.3
(22) Date of filing: 04.05.2023
(51) Int. Cl.: H04W 36/08, H04L 69/24

(54) **EXCHANGING CAPABILITIES AMONG RADIO ACCESS NETWORK NODES**
AUSTAUSCH VON FÄHIGKEITEN ZWISCHEN KNOTEN DES FUNKZUGANGSNETZES
ÉCHANGEMENT DE CAPACITÉS ENTRE NOEUDS DU RÉSEAU D'ACCÈS RADIO

(43) Date of publication of application: 06.11.2024
(73) Proprietor: Deutsche Telekom AG, 53113 Bonn (DE)
(72) Inventor: KLATT, Axel, 50999 Köln (DE)
(74) Representative: Schwöbel, Thilo K.

(56) References cited:
- WO-A1-2023/053057
- CN-A- 109 246 747
- US-A1- 2018 376 380
- US-A1- 2022 012 645

## Description

### BACKGROUND

The present invention relates a method for operating a telecommunications network comprising a radio access network, wherein the radio access network comprises a plurality of radio access network nodes that are able to interact in order to provide communication services to user equipments being connected to or served by the telecommunications network, wherein the radio access network nodes realize, at least partly, radio access coordinator unit functionalities and/or base station functionalities.

Furthermore, the present invention relates to a system or to a telecommunications network for operating the telecommunications network comprising a radio access network, wherein the radio access network comprises a plurality of radio access network nodes that are able to interact in order to provide communication services to user equipments being connected to or served by the telecommunications network, wherein the radio access network nodes realize, at least partly, radio access coordinator unit functionalities and/or base station functionalities.

Furthermore, the present invention relates to a program and to a computer-readable medium for operating a telecommunications network comprising a radio access network according to the inventive method.

The present invention relates to the area of telecommunications networks, especially wireless telecommunications networks or mobile communication networks. Such conventionally known telecommunications networks or mobile communication networks typically predominantly are or comprise monolithic blocks from a single vendor - especially regarding network infrastructure, and particularly with regard to the radio access network and base station entities.

In conventionally known telecommunications networks or mobile communication networks, the classical approach is that each (monolithic) vendor of the next-generation radio access network (NG-RAN) supplies their own proprietary operation and maintenance system (O&M system).

A consistent configuration between the different neighboring nodes of the next-generation radio access network is prerequisite for error-free interworking and consistent behavior across vendor boundaries in real network deployments. This consistency is typically ensured by the respective mobile operators (of the considered telecommunications networks) who request certain functionality of the next-generation radio access network from multiple vendors, integrate and test the functionalities and perform a consistent configuration in the different (typically vendor-specific) O&M systems.

Likewise, in the context of the open network automation platform (ONAP) that is proposing automation, orchestration and management systems, the responsibility for ensuring consistency (regarding the interworking of different network nodes, especially of or associated with the radio access network, provided by different vendors) lies with the mobile network operators.

However, ensuring such consistency becomes more and more complicated in case of more diverse multi-vendor radio access network implementations, especially next-generation radio access networks.

Document US 2018 / 376 380 A1 describes a method for configuring a radio transceiver comprising a CU (centralized unit) coupled to a DU (distributed unit). The distributed unit receives a connection request from a user equipment, which is forwarded to the CU. Further, the CU is provided with information so that the CU can determine whether the DU will support the request and the CU can determine if it will support the request. If both are prepared to support the request, the user equipment can couple with the DU and the CU. More particularly, the DU can decide whether it will support the request and communicate it to the CU and if not, can transmit the request to another DU and so advise the CU. Alternatively, the DU can expose its capabilities to the CU and allow the CU to decide whether the DU will support the request and communicate it to the DU.

Further, document CN 109 246 747 A discloses a UE access method, document US 2022 / 012 645 A1 discloses an apparatus for non-real-time (Non-RT) radio access network intelligence controller (RIC) services for machine learning (ML) in an open radio access network (O-RAN) and WO 2023 / 053 057 A1 discloses methods to realize an inter Near-RT RIC communication to enable the near real-time control and optimization of E2 Nodes across an entire Heterogeneous Networks (HetNets) irrespective of number of Near-RT RICs deployed.

### SUMMARY

An object of the present invention is to provide an effective and simple approach for operating a telecommunications network comprising a radio access network such that a plurality of radio access network nodes - that are able to interact in order to provide communication services to user equipments being connected to or served by the telecommunications network - are enabled to implement such interaction, despite being provided by different vendors, in a more efficient, less error-prone as well as more automatic manner. A further object of the present invention is to provide a corresponding system or telecommunications network, and a corresponding program and computer-readable medium.

The object of the present invention is achieved by a method, a system / telecommunications network, a program and computer-readable medium according to the features of independent claims 1, 9, 10 and 11.

It is thereby advantageously possible, according to the present invention, that a dynamic capability exchange is possible over different interfaces (between radio access network nodes realizing, at least partly, radio access coordinator unit functionalities and/or base station functionalities), and this especially in a disaggregated radio access network. Only exemplarily, in the following especially the specific first radio access network node and the specific second radio access network node, or their interaction, is specifically considered in order to explain, in a detailed manner, how such interaction or communication, between such radio access network nodes, is able to be performed according to different embodiments of the present invention in order to operate the telecommunications network and/or the radio access network in view of serving the user equipment with communication services and especially in order to exchange, or to transmit, capability information from one radio access network node to another (especially neighbouring) radio access network node, as well as vice versa in a rather automatic manner and especially without the need for a manual interaction or configuration of proprietary operation and maintenance systems related only to network nodes provided by one single supplier of network infrastructure equipment, e.g. base station entities or components thereof.

In such a manner, it is advantageously possible, according to the present invention, the configuration information or capability information is transmitted and/or exchanged between radio access network nodes (i.e. capability information regarding the capabilities (or regarding the current or future state thereof) of the respective network node transmitting (or sending) such capability information) that are required to interact in view of serving the user equipment with communication services - such requirement for interaction of such radio access network nodes, e.g., resulting from their geographical vicinity and/or from their functional relationship.

According to the present invention, it is, hence, advantageously possible to provide for a consistent - and, especially, up-to-date - configuration between the different (especially neighboring) radio access network nodes of the next-generation radio access network, and this especially across vendor boundaries in real network deployments, i.e. regarding radio access network nodes being provided by different - if not even a multitude - of suppliers; furthermore, such a consistent configuration among such - potentially heterogeneous (i.e. of different suppliers or vendors, and providing different functionalities at potentially different layers) - radio access network nodes is able to be obtained, according to the present invention, in an automatic (or rather automatic or automated) manner, i.e. either completely automatically or, at least, in a manner such that no profound or detailed configuration skills are required in order to trigger such exchange of capability information, e.g., in view of adding or removing or modifying a radio access network node as part of the telecommunications network or radio access network. For example, it might be required - in order to start a network node or in order to add a network node - to somehow activate an autoconfiguration or startup procedure, e.g. by means of pushing a button or the like, but not an in-depth review or consideration of the network node's configuration.

According to the present invention, a multitude of different mechanisms or manners to transmit or send - by a specific first radio access network node - such capability information (relating to the specific first radio access network node) to a specific second radio access network node (and, of course, also vice versa in order to assure the mentioned consistent configuration) is contemplated and suggested, including (but not limited to) a flexible direct (capability) information exchange or via a repository or inventory network function or service (e.g. a radio access network inventory and capability network function RANICNF).

Especially according to the present invention, this exchange (or transmission) of capability information is structured according to different interfaces or reference points (i.e. capabilities or capability information relating to (capabilities on or using) specific interfaces or reference points are preferably grouped (or transmitted in a structured or coordinated manner), e.g. regarding interfaces such as the Uu interface towards the user equipments, the NG interface towards (network functions or services of) the core network and the Xn interface between radio access network nodes of the NG-RAN.

According to the present invention, it is advantageously possible and preferred that, as part of the second step, the specific second radio access network node receives the capability indication message sent by the specific first radio access network node, wherein, especially, the specific second radio access network node sends, prior to the first step, a capability indication request message to the specific first radio access network node, wherein, especially, the specific first radio access network node sends the capability indication message upon detecting the presence of the specific second radio access network node or as a generic multicast message or as a broadcast message, especially periodically.

By means of the specific second radio access network node receiving the capability indication message (sent by the specific first radio access network node), it is advantageously possible to provide for a rather direct communication (and exchange of capability information) from the specific first radio access network node to the specific second radio access network node.

By means of a capability indication request message (sent by the specific second radio access network node) and/or by means of presence detection and/or broadcasting (or multicasting), advantageous variations of such a direct communication lead to the possibility to advantageously perform the inventive method in a flexible and efficient manner.

According to the present invention, it is furthermore advantageously possible and preferred that, as part of the first step, a central database entity or functionality receives the capability indication message sent by the specific first radio access network node, wherein, as part of the second step, the capability information related to the specific first radio access network node is received, by the specific second radio access network node, from the central database entity or functionality,
wherein especially the central database entity or functionality is or corresponds to a radio access network inventory and/or capability network function.

By means of using a rather centralized database entity or functionality for transmitting the capability information (from one radio access network node to another radio access network node), it is advantageously possible to provide for an indirect transmission of such capability information, especially by means of using a radio access network inventory and capability network function RANICNF.

As a further alternative realization (between, on the one hand, a strictly direct communication or transmission of such capability information - directly from one radio access network node to another radio access network node -, and, on the other hand, a strictly centralized or service-based indirect communication or transmission of such capability information - e.g. via a single centralized database or network function or service for providing a repository functionality regarding such capability information), a central database entity or functionality might also be central to only a group of radio access network nodes, e.g. a group of radio access network nodes corresponding to one base station entity or to one gNB.

According to the present invention, it is furthermore advantageously possible and preferred that in case of a change of the capability of the specific first radio access network node, a modified capability information is sent by the specific first radio access network node, especially by means of a further capability indication message, wherein especially the capability indication message and/or the further capability indication message comprises different sets of capability information, wherein each different set of capability information represent a different capability state of the specific first radio access network node, wherein especially different capability states of the specific first radio access network node are dependent on at least one of the following:
-- the location of the specific first radio access network node,
-- a specific time interval or a repeating time interval, preferably during a day, or a week or a month or a year,
-- a local or general or network-wide parameter, especially related to the local or network-wide network load.

According to the present invention, it is thereby advantageously possible that the inventive method is able to be performed in a flexible and efficient manner.

According to the present invention, it is furthermore advantageously possible and preferred that the capability indication message is sent using at least one out of the following interfaces or reference points:
-- the 3GPP Xn interface or reference point,
-- the 3GPP E1 interface or reference point,
-- the 3GPP F1 interface or reference point,
-- the ORAN E2 interface or reference point,
-- the ORAN A1 interface or reference point,
-- the ORAN OpenFronthaul CUS interface or reference point,
-- the ORAN OpenFronthaul M interface or reference point,
thereby especially realizing a direct and/or automatic exchange of capability information between involved radio access network nodes and especially between the specific first and second radio access network node.

According to the present invention, it is thereby advantageously possible that the inventive method is able to be performed in a flexible and efficient manner.

According to the present invention, it is furthermore advantageously possible and preferred that the capability information is sent and related to or indicating the capability of the specific first radio access network node relates to the communication and feature capabilities
-- in general or
-- regarding one or a plurality of specific interfaces or reference points, especially Uu and/or Xn and/or NG interfaces or reference points or any other logical interface involving the radio access network node.

According to the present invention, it is thereby advantageously possible that the inventive method is able to be performed in a flexible and efficient manner.

According to the present invention, it is furthermore advantageously possible and preferred that the form or the data format of the capability information corresponds to at least one of the following forms or data formats:
-- ASN.1, Abstract Syntax Notation One,
-- XML, Extensible Markup Language,
-- JSON, JavaScript Object Notation.

According to the present invention, it is thereby advantageously possible that the inventive method is able to be performed in a flexible and efficient manner.

According to the present invention, it is furthermore advantageously possible and preferred that radio access network nodes of the plurality of radio access network nodes, and especially the specific first and second radio access network nodes, correspond to or realize one functionality or a plurality of functionalities of the following:
-- radio access coordinator unit,
-- base station centralized unit,
-- base station distributed unit,
-- base station radio unit,
wherein especially such functionality or such functionalities are able to be related to or processing one out of the following:
-- user plane messages or user plane communication,
-- control plane messages or control plane communication, or
-- both user plane and control plane messages or user plane and control plane communication.

According to the present invention, it is thereby advantageously possible that the inventive method is able to be performed in a flexible and efficient manner.

Furthermore, the present invention relates to a system or to a telecommunications network as defined in independent claim 9.

Additionally, the present invention relates to a program comprising a computer readable program code which, when executed on a computer or on a specific first radio access network node or on a specific second radio access network node or on a central database entity or functionality, especially a radio access network inventory and/or capability network function, or in part on the specific first radio access network node and/or in part on the specific second radio access network node and/or in part on the central database entity or functionality, especially the radio access network inventory and/or capability network function, causes the computer or the specific first radio access network node or the specific second radio access network node or the central database entity or functionality, especially the radio access network inventory and capability network function, to perform the inventive method.

Still additionally, the present invention relates to a computer-readable medium comprising instructions which, when executed on a computer or on a specific first radio access network node or on a specific second radio access network node or on a central database entity or functionality, especially a radio access network inventory and/or capability network function, or in part on the specific first radio access network node and/or in part on the specific second radio access network node and/or in part on the central database entity or functionality, especially the radio access network inventory and/or capability network function, causes the computer or the specific first radio access network node or the specific second radio access network node or the central database entity or functionality, especially the radio access network inventory and capability network function, to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a telecommunications network comprising an access network, a core network and a user equipment, wherein the core network typically comprises a number of network functions or services, and wherein the (radio) access network likewise comprises a number of base station entities providing radio coverage for specific geographical areas, respectively.
Figure 2 schematically illustrates different interfaces or reference points between network nodes or parts of the core network of the telecommunications network as well as network nodes or parts of the radio access network (radio access network nodes) of the telecommunications network.
Figure 3 schematically illustrates an example of a base station entity, representing different functional entities or functionalities (or radio access network nodes) of the base station entity in order to provide communication services to user equipments connected to or served by the telecommunications network.
Figures 4 and 5 schematically illustrate different communication situations between two radio access network nodes of the radio access network of the telecommunications network.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

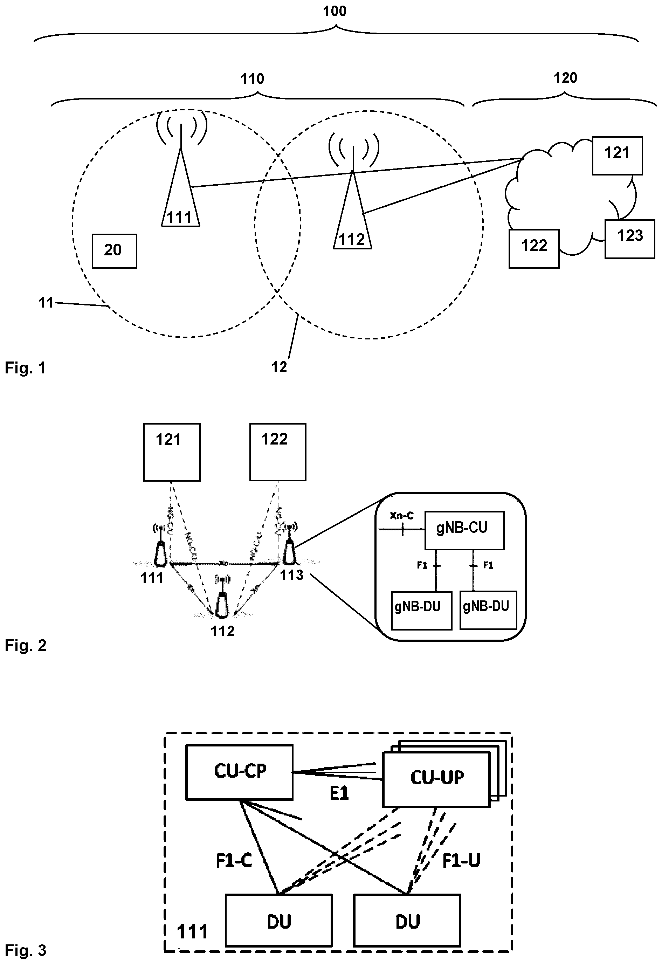

In Figure 1, a telecommunications network 100 comprising an access network 110, and a core network 120 is schematically shown. The telecommunications network 100 or also mobile communication network 100 is typically realized as a cellular network or cellular mobile communication network 100. The telecommunications network 100, especially the core network 120, typically comprises a number of network functions or services 121, 122, 123. Examples of such network functions or services 121, 122, 123 include, e.g., an access and mobility management function, AMF, and/or a user plane function, UPF - especially in case of a 5G telecommunications network, in which case the core network 120 might also be called a 5G core (system) and the access network 110 or radio access network 110 a next-generation radio access network, NG-RAN. The access network 110 comprises a plurality of radio cells 11, 12, i.e. geographical areas served, respectively, by base station entities. In the exemplary situation or scenario shown in Figure 1, a first base station entity 111 generates or is associated with or spans the first radio cell 11, and a second base station entity 112 generates or is associated with or spans the second radio cell 12. The base station entities 111, 112 typically realize gNB functionality or next-generation gNB functionality. The telecommunications network 100 is typically connected to a plurality of user equipments 20 (or, rather, the user equipments 20 are connected to the telecommunications network 100), one of which is schematically shown in Figure 1.

Figure 1 primarily shows the simple situation that the user equipment 20 is connected to its home network 100, especially its home public land mobile network, i.e. the telecommunications network 100 represented in Figure 1 corresponds to the home network of the user equipment 20. However, the telecommunications network 100 (to which the user equipment 20 is connected, or, rather, to whose radio access network 120 the user equipment 20 is connected) might also correspond to a visited network or visited public land mobile network, and the home network or home public land mobile network of the user equipment 20 would, in this case, correspond to another telecommunications network connected to the telecommunications network 100, however, such other telecommunications network is not shown in Figure 1.

According to the present invention, the network nodes of the radio access network 110 (or the functionality of the radio access network 110) might be realized in a rather disaggregated manner (or disaggregated radio access network architecture), by means of a plurality of radio access network nodes that are able to interact in order to provide communication services to the user equipment 20 (or, rather, also to other user equipments not explicitly shown in Figure 1) being connected to or served by the telecommunications network 100.

An example of such a disaggregated realization of the radio access network 110 is schematically shown in Figure 2, which especially illustrates different interfaces or reference points between network nodes or parts of the core network 120 of the telecommunications network 100 as well as network nodes or parts of the radio access network 110 (radio access network nodes) of the telecommunications network 100: Figure 2 exemplarily and schematically shows a first network function or service 121 of the core network 120 and a second network function or service 122 of the core network 120. The first and second network function or service 121, 122 might, e.g., correspond to an access and mobility management function, AMF, and/or to a user plane function, UPF. Furthermore, Figure 2 exemplarily and schematically shows the first base station entity 111, the second base station entity 112, and a third base station entity 113. The base station entities 111, 112, 113 are connected:
-- with each other via (or using) a (respective) Xn interface or reference point (potentially split into an Xn-C (Xn control plane) interface or reference point and/or an Xn-U (Xn user plane) interface or reference point), and
-- towards the first and/or second network function or service 121, 122 - via (or using) a (respective) NG-C (NG control plane) interface or reference point and/or a NG-U (NG user plane) interface or reference point.

When a disaggregated realization of the radio access network 110 is used, the base station entities 111, 112, 113 might be furthermore split, as schematically shown, in Figure 2, for the example of the third base station entity 113: According to one separation, the gNB (or base station entity) functionality might be split into a central (or centralized) unit (gNB-CU) functionality and a distributed unit (gNB-DU) functionality, with an F1 interface or reference point between the gNB centralized unit (CU) and the gNB distributed unit (DU). Of course, the other base station entities 111, 112 might also be split analogously. Additionally, a further split, or according to a further separation, the gNB centralized unit (CU) (and/or the gNB distributed unit, DU) might be split up as shown in Figure 3 which shows an example of the first base station entity 111, being split up and representing different functional entities or functionalities (or radio access network nodes) of the base station entity 111 in order to provide communication services to user equipments 20 connected to or served by the telecommunications network 100: Especially, the gNB centralized unit (CU) might be split up in a gNB centralized unit control plane (CU-CP) and a gNB centralized unit user plane (CU-UP) - with an E1 interface or reference point in between. In the exemplary embodiment shown in Figure 3, the base station entity 111 or gNB comprises two gNB distributed units (DU), wherein each of these gNB distributed units (DU) is, respectively, connected to the gNB centralized unit control plane (CU-CP) by means of an F1-C (F1 control plane) interface or reference point, and to the gNB centralized unit user plane (CU-UP) by means of an F1-U (F1 user plane) interface or reference point. Likewise (but not shown in Figure 3), the gNB distributed unit (DU) might also be split up into a control plane entity (or radio access network node) and a user plane entity (or radio access network node). Further elements of a disaggregated radio access network 110 might comprise at least one of the following local or physical nodes: A Radio Unit (RU), a none Realtime Radio Intelligent Controller (non-RT RIC) or a Near Realtime Radio Intelligent Controller (NearRT-RIC) - especially such nodes or entities according to the respective O-RAN specification.

Hence, by means of such disaggregation - within the radio access network architecture and especially within 5G, i.e. the disaggregation of radio access network nodes (especially the base station entity functionality), and specifically the gNB -, a more flexible mix and match of different components (radio access network nodes) is possible; however, as a consequence of such disaggregation or split of or into radio access network nodes, a higher number of different kinds of interfaces or reference points results in such a next-generation radio access network, NG-RAN, implementation.

In the context of the open radio access network, O-RAN alliance, further functional disaggregation (with the introduction of further related interfaces or reference points) is proposed.

However, with more interfaces or reference points (i.e. a higher number of different kinds of interfaces or reference points) more network coordination between radio access network nodes is required, which is not the case with a single vendor monolithic radio access network implementation.

As already mentioned, in conventionally known telecommunications networks 100 or mobile communication networks, the classical approach is that each (monolithic) vendor of the next-generation radio access network (NG-RAN) supplies their own proprietary operation and maintenance system (O&M system). As a consistent configuration between the different neighboring nodes of the next-generation radio access network is prerequisite for error-free interworking and consistent behavior across vendor boundaries in real network deployments, there is the requirement, typically upon the respective mobile network operator, to assure such consistency among the different radio access network nodes of the considered telecommunications network; this typically involves the need to integrate and test the functionalities of radio access network nodes of different vendors and to perform a consistent configuration in the different (typically vendor-specific) O&M systems.

Also in the context of the open network automation platform (ONAP), the responsibility for ensuring consistency (regarding the interworking of different network nodes, especially of or associated with the radio access network, provided by different vendors) lies with the mobile network operators.

This represents a considerable burden on the mobile network operators.

According to the present invention, a radio access network node capability coordination is provided such that feature/functionality support information of the NG-RAN on a per interface basis is possible (either on a per interface node pair or centrally available), so that the communicating radio access network nodes or NG-RAN nodes are aware of each (other) node's capabilities related to the communication via the respective interface, especially in a dynamically changing network topology.

Hence, according to the present invention, a flexible direct information exchange between involved NG-RAN nodes - about the features the different nodes support - is provided. The evolution of 3GPP radio technologies adds hundreds of new user equipment features and/or network features release by release, whose manual configuration represents an always higher burden. Also, new concepts such as small cells, moving nodes (relays, IABs) and non-public-networks (NPN), including dynamic non-stationary topologies (e.g. NTN) require continuous changes to the network topology compared to the quasi stationary network setups known in rather conventionally known telecommunications networks.

Therefore, the present invention provides a dynamic capability exchange over different interfaces (between radio access network nodes realizing, at least partly, radio access coordinator unit functionalities and/or base station functionalities) in a disaggregated radio access network.

According to the present invention, in order to operate the telecommunications network 100 and/or the radio access network 110 and in order for a specific first radio access network node and a specific second radio access network node interacting with each other, the method comprises the steps of:
-- in a first step, the specific first radio access network node sends a capability indication message, the capability indication message comprises capability information related to or indicating the capability of the specific first radio access network node, and
-- in a second step, the specific second radio access network node receives capability information related to the specific first radio access network node.

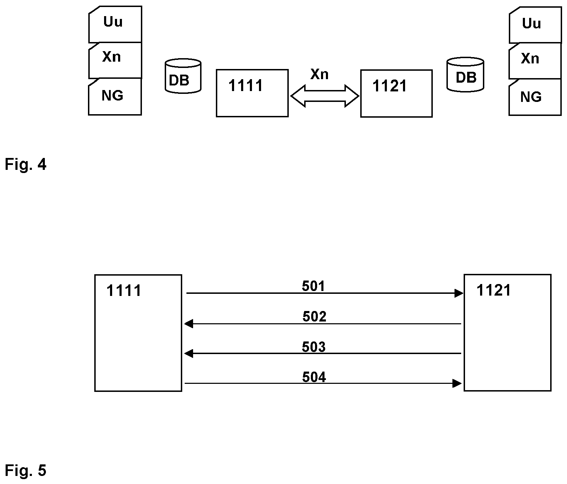

This is exemplarily shown in Figures 4 and 5 which schematically illustrate different communication situations between two considered radio access network nodes of the radio access network 110 of the telecommunications network 100: A first radio access network node 1111 and a second radio access network node 1121 communicate with each other (indirectly) the reference point, and exchange capability information. These first and second radio access network nodes 1111, 1121 are hereinafter also called specific first radio access network node 1111 and specific second radio access network node 1121, respectively. In the situation or scenario represented in Figure 4, capability information (regarding the specific first radio access network node 1111) is to be transmitted to the specific second radio access network node 1121: the specific first radio access network node 1111 sends a capability indication message, the capability indication message comprises capability information related to or indicating the capability of the specific first radio access network node 1111, hereafter, the specific second radio access network node 1121 receives the capability information related to the specific first radio access network node 1111. In Figure 4, both the specific first and second radio access network nodes 1111, 1121 are shown to comprise (or to be associated or assigned to) databases or database entities DB in order to store capability information (of the respective other, or neighbouring network nodes); especially, such capability information are stored, or organized, - especially as part of such databases or data base entities DB - according to or relating to different interfaces or reference points, used by such radio access network nodes; Figure 4 schematically and exemplarily shows such capability information regarding the Uu, Xn, and NG interfaces or reference points.

Especially, in case of a direct communication (or exchange of capability information) between the specific first and second radio access network nodes 1111, 1121 (as shown in Figures 4 and 5), the capability indication message sent by the specific first radio access network node 1111 (in the first step) might be directly received (in the second step) by the specific second radio access network node 1121, i.e. as part of the second step, the specific second radio access network node 1121 receives the capability indication message sent by the specific first radio access network node 1111 (in the first step).

Especially, the capability indication message is able to be sent, by the specific first radio access network node 1111, upon detecting the presence of the specific second radio access network node 1121 or as a generic multicast message or as a broadcast message, especially periodically.

Hence, Figure 4 represents a possible realization of the required database and the information exchange (between radio access network nodes) according to the present invention; especially, decentralized databases DB are used in either each involved node or in areas or for each involved NG-RAN vendor. It is proposed to structure the databases on a per interface relation, i.e. Uu features | Xn features | NG features.

The example or situation of a direct communication (or exchange of capability information) is also schematically and exemplarily shown in Figure 5: In a first processing step 501, the specific first radio access network node 1111 transmits the capability indication message to the specific second radio access network node 1121 (i.e. thereby realizing the first and second steps of the inventive method), and in a second processing step 502, the specific second radio access network node 1121 sends a response message, e.g. an acknowledgement message, back to the specific first radio access network node 1111. Figure 5 furthermore exemplarily shows a transmission of capability information in the inverse direction, i.e. from the specific second radio access network node 1121 towards the specific first radio access network node 1111: In a third processing step 503, the specific second radio access network node 1121 transmits a further capability indication message to the specific first radio access network node 1111 (i.e. thereby also realizing the first and second steps of the inventive method, albeit with exchanged roles of the specific first and second radio access network nodes 1111, 1121), and in a fourth processing step 504, the specific first radio access network node 1111 sends a further response message, e.g. an acknowledgement message, back to the specific second radio access network node 1121. The exchange of capability information shown in Figure 5 is, e.g., realized at node setup of either the specific first or second (or both) radio access network nodes 1111, 1121.

Hence, Figure 5 shows an exemplary message exchange between two radio access network nodes, e.g. at communication path setup. In the example the specific first radio access network node 1111 sends the NG-RAN CAPBILITY INDICATION message to the specific second radio access network node 1121, which stores the conveyed information in the decentralized database DB (not shown in Figure 5) for this communication relation and acknowledges the successful reception and storage of the information with a ACK message (NG-RAN CAPBILITY INDICATION ACKNOWLEDGEMENT).

The structure of the NG-RAN CAPBILITY INDICATION message especially comprises entries defined or structured (clustered) per interface relation; the formats of the table entries in the databases DB and/or in the capability indication messages especially follow a standardized approach; e.g. the structure can be any well-known data format from ASN.1 via XML to JSON formats.

According to another scenario or possibility to transmit (or to exchange) the capability information (albeit not shown in the Figures), the specific second radio access network node 1121 sends, prior to the first step, a capability indication request message to the specific first radio access network node 1111, the it is only in response to such a capability indication request message (received from the specific second radio access network node 1121) that the specific first radio access network node 1111 sends (as part of the first step) the capability indication message.

According to still another scenario or possibility to transmit the capability information (albeit also not shown in the Figures), a central database entity (not represented in the Figures) is used: As part of the first step, (i.e. as a result of the specific first radio access network node 1111 sending the capability indication message), the central database entity or functionality receives the capability indication message sent by the specific first radio access network node 1111; as part of the second step, the capability information related to the specific first radio access network node 1111 is received, by the specific second radio access network node 1121, from the central database entity or functionality. Preferably, the central database entity or functionality is or corresponds to a radio access network inventory and/or capability network function.

Especially according to the present invention, in case of a change of the capability of the specific first radio access network node 1111, a modified capability information is sent by the specific first radio access network node 1111, especially by means of a further capability indication message.

The capability indication message and/or the further capability indication message might comprise different sets of capability information, wherein each different set of capability information represent a different capability state of the specific first radio access network node 1111.

Especially, different capability states of the specific first radio access network node 1111 are dependent on at least one of the following:
-- the location of the specific first radio access network node 1111,
-- a specific time interval or a repeating time interval, preferably during a day, or a week or a month or a year,
-- a local or general or network-wide parameter, especially related to the local or network-wide network load.

The specific first radio access network node 1111 and the specific second radio access network node 1121 considered in Figures 4 and 5 are meant only as examples of arbitrary network nodes of the telecommunications network 100, especially of the radio access network 110, i.e. typically such radio access network nodes realize, at least partly, radio access coordinator unit functionalities and/or base station functionalities. This is, e.g. the case for the following radio access network nodes: gNB distributed unit (control plane and/or user plane) DU-CP/DU-UP, gNB centralized unit (control plane and/or user plane) CU-CP/CU-UP, gNB remote unit (control plane and/or user plane) RU-CP/RU-UP, near realtime radio access network intelligent controller (near-RT RAN RIC), non real-time radio access network intelligent controller (non-RT RAN RIC) - especially such nodes or entities according to the respective O-RAN specification.

According to the present invention, the specific first radio access network node 1111 might especially correspond to such a part or component of the first base station entity 111, and the specific second radio access network nodes 1121 might especially correspond to such a part or component of the second base station entity 112; however, other scenarios and situations are likewise possible according to the present invention, especially also the case that the specific first radio access network node 1111 and the specific second radio access network node 1121 correspond to different parts or components of one base station entity, e.g. the first base station entity 111, especially in case the such different components or parts of one and the same base station entity are provided by different vendors - and then need to be coordinated, as parts of the telecommunications network 100, in order to provide communication services to user equipments 20 being connected to or served by the telecommunications network 100.

Hence, the present invention provides for a dynamic exchange of capability information over interfaces in a disaggregated radio access network.

Especially, feature/functionality support information are provided of the NG-RAN components (i.e. the plurality of radio access network nodes) on a per interface basis, either on a per interface node pair or centrally using a central database entity, so that the communicating radio access network (NG-RAN) nodes are aware of each node's capabilities (i.e. aware of the capabilities of the respective other, or neighbouring, radio access network nodes) related to the communication via the respective interface, especially in a dynamically changing network topology.

According to the present invention, this is able to be achieved by means of each related (radio access network) node can be pulled by the other related (radio access network) node about the (radio access network) node's related communication and feature capabilities in general or for the related interface, e.g. by means of an NG-RAN capability query. Especially, this is able to be realized by using 3GPP Xn or O-RAN E2- interface protocols which need to be extended in this direction.

Furthermore (alternatively or cumulatively to the capability information being pulled by other radio access network nodes), a transmission of capability information is possible using a periodic node capability broadcast or multicast via the respective interface by each involved (radio access network) node, e.g. by means of an NG-RAN capability announcement. Furthermore (alternatively or cumulatively to pulling the capability information, or to transmit, broadcast or multicast the capability information), a central database is able to be used where the (radio access network) node's capabilities are stored and made available for usage of this information by other related (radio access network) nodes for the respective interface.

This is also able to be realized by introduction of a service based architecture (SBA) in the radio access network: Especially, a radio access network inventory and capability network function" (RANICNF) is then needed to be introduced; e.g., at registration, each (radio access network) node then populates a database entity of such a RANICNF with its capability information or pieces of capability information (or sets of capability information, wherein each different set of capability information represent a different capability state of the respective (radio access network) node) per interface or in general also related to Uu relevant capabilities (i.e. relevant regarding communication with the user equipment 20) and the corresponding (neighbouring) (radio access network) nodes, utilizing this interface, would query the neighbouring (radio access network) node's capability from the RANICNF on setting up the node and establishment of an interface connection between neighboring (NG-RAN) nodes.

As a baseline for the definition of the functionalities supported in the related NG-RAN node could be the information about capabilities of user equipments being defined in 3GPP TR 38.822 already for functionality which is related to the Uu interface of the NG-RAN. Based in this information exchange the source NG-RAN node could select a target NG-RAN node in case of mobility of a device or for load balancing reasons taking into account the Uu related neighboring node's capabilities. E.g., if a user equipment 20 is currently involved in an optimized XR session in the source node and there is a need to perform a handover while there are two neighboring nodes which could take over this user equipment connection, but just one of the node supports the XR optimization, in conventionally known telecommunications networks, the source NG-RAN node has no possibility to select the right target node (i.e. having the required functionality or capability) as the selection principles are typically statically pre-defined and radio related measurements (e.g. signal strength) is the main decision criteria. As with more diverse services and a heterogeneous dynamic network environment such additional decision criteria become more relevant.

According to the present invention, it is especially preferred to use (or to provide the possibility to use) different feature sets, such as, e.g., at least one out of the following:
-- a user equipment-related feature support (e.g. to be used by the NG-RAN - or radio access network nodes thereof - via the Uu interface), especially based on definitions of features in 3GPP TR 38.822;
-- NG-RAN internal features (e.g. energy saving, SON, ML / Al functionality etc) to be used via the Xn interface;
-- 5GC related functionality which is required between core network functions and radio access network functions, to be used via the NG2 or NG3 interface; examples are functionalities requiring e2e support such as network slicing, non-terrestrial network (NTN), network sharing, non-public-networks NPN ("Campus Networks") and so on.

## Claims

1. Method for operating a telecommunications network (100) comprising a radio access network (110), wherein the radio access network (110) comprises a plurality of radio access network nodes that are able to interact in order to provide communication services to user equipments (20) being connected to or served by the telecommunications network (100),
wherein the radio access network nodes realize, at least partly, radio access coordinator unit functionalities and/or base station functionalities, the telecommunications network (100) further comprising a central database entity or functionality,
wherein, in order to operate the telecommunications network (100) and/or the radio access network (110) and in order for a specific first radio access network node (1111) and a specific second radio access network node (1121) interacting with each other, the method comprising:
-- in a first step, the specific first radio access network node (1111) sends a capability indication message, the capability indication message comprising capability information related to or indicating the capability of the specific first radio access network node (1111), and the central database entity or functionality receives the capability indication message sent by the specific first radio access network node (1111),
-- in a second step, the specific second radio access network node (1121) receives capability information related to the specific first radio access network node (1111), wherein the capability information related to the specific first radio access network node (1111) is received, by the specific second radio access network node (1121), from the central database entity or functionality.

2. Method according to claim 1, wherein, as part of the second step, the specific second radio access network node (1121) receives the capability indication message sent by the specific first radio access network node (1111), wherein, the specific second radio access network node (1121) sends, prior to the first step, a capability indication request message to the specific first radio access network node (1111),
wherein, the specific first radio access network node (1111) sends the capability indication message upon detecting the presence of the specific second radio access network node (1121) or as a generic multicast message or as a broadcast message.

3. Method according to one of the preceding claims, wherein the central database entity or functionality is or corresponds to a radio access network inventory and/or capability network function.

4. Method according to one of the preceding claims, wherein in case of a change of the capability of the specific first radio access network node (1111), a modified capability information is sent by the specific first radio access network node (1111),
wherein the capability indication message and/or a further capability indication message comprises different sets of capability information, wherein each different set of capability information represent a different capability state of the specific first radio access network node (1111), wherein different capability states of the specific first radio access network node (1111) are dependent on at least one of the following:
-- the location of the specific first radio access network node (1111),
-- a specific time interval or a repeating time interval,
-- a local or general or network-wide parameter, related to the local or network-wide network load.

5. Method according to one of the preceding claims, wherein the capability indication message is sent using at least one out of the following interfaces or reference points:
-- the 3GPP Xn interface or reference point,
-- the ORAN E2 interface or reference point,
thereby realizing an automatic exchange of capability information between involved radio access network nodes.

6. Method according to one of the preceding claims, wherein the capability information is sent and related to or indicating the capability of the specific first radio access network node (1111) relates to the communication and feature capabilities
-- in general or
-- regarding one or a plurality of specific interfaces or reference points, Uu and/or Xn and/or NG interfaces or reference points or any other logical interface involving the radio access network node.

7. Method according to one of the preceding claims, wherein the form or the data format of the capability information corresponds to at least one of the following forms or data formats:
-- ASN.1, Abstract Syntax Notation One,
-- XML, Extensible Markup Language,
-- JSON, JavaScript Object Notation.

8. Method according to one of the preceding claims, wherein radio access network nodes of the plurality of radio access network nodes, and the specific first and second radio access network nodes (1111, 1121), correspond to or realize one functionality or a plurality of functionalities of the following:
-- radio access coordinator unit,
-- base station centralized unit,
-- base station distributed unit,
-- base station radio unit,
wherein such functionality or such functionalities are able to be related to or processing one out of the following:
-- user plane messages or user plane communication,
-- control plane messages or control plane communication, or
-- both user plane and control plane messages or user plane and control plane communication.

9. System or telecommunications network (100) for operating the telecommunications network (100) comprising a radio access network (110),
wherein the radio access network (110) comprises a plurality of radio access network nodes that are able to interact in order to provide communication services to user equipments (20) being connected to or served by the telecommunications network (100), the telecommunications network (100) further comprising a central database entity or functionality,
wherein the radio access network nodes realize, at least partly, radio access coordinator unit functionalities and/or base station functionalities,
wherein, in order to operate the telecommunications network (100) and/or the radio access network (110) and in order for a specific first radio access network node (1111) and a specific second radio access network node (1121) interacting with each other, the system or telecommunications network (100) is configured such that:
-- the specific first radio access network node (1111) sends a capability indication message, the capability indication message comprises capability information related to or indicating the capability of the specific first radio access network node (1111), wherein the central database entity or functionality is configured to receive the capability indication message sent by the specific first radio access network node (1111),
-- the specific second radio access network node (1121) receives capability information related to the specific first radio access network node (1111), wherein the specific second radio access network node (1121) is configured to receive the capability information related to the specific first radio access network node (1111) from the central database entity or functionality.

10. Program comprising a computer readable program code which, when executed on a computer or on a specific first radio access network node (1111) or on a specific second radio access network node (1121) or on a central database entity or functionality, a radio access network inventory and/or capability network function, or in part on the specific first radio access network node (1111) and/or in part on the specific second radio access network node (1121) and/or in part on the central database entity or functionality, the radio access network inventory and/or capability network function, causes the computer or the specific first radio access network node (1111) or the specific second radio access network node (1121) or the central database entity or functionality, the radio access network inventory and capability network function, to perform a method according one of claims 1 to 8, respectively.

11. Computer-readable medium comprising instructions which, when executed on a computer or on a specific first radio access network node (1111) or on a specific second radio access network node (1121) or on a central database entity or functionality, a radio access network inventory and capability network function, or in part on the specific first radio access network node (1111) and/or in part on the specific second radio access network node (1121) and/or in part on the central database entity or functionality, the radio access network inventory and/or capability network function, causes the computer or the specific first radio access network node (1111) or the specific second radio access network node (1121) or the central database entity or functionality, the radio access network inventory and/or capability network function, to perform a method according one of claims 1 to 8, respectively.

## Patentansprüche

1. Verfahren zum Betreiben eines Telekommunikationsnetzes (100), umfassend ein Funkzugangsnetz (110), wobei das Funkzugangsnetz (110) mehrere Funkzugangsnetzknoten umfasst, die in der Lage sind zu interagieren, um Kommunikationsdienste für Benutzerausrüstungen (20) bereitzustellen, die mit dem Telekommunikationsnetz (100) verbunden sind oder durch das Telekommunikationsnetz (100) bedient werden,
wobei die Funkzugangsnetzknoten, mindestens teilweise, Funkzugangskoordinatoreinheit-Funktionalitäten und/oder Basisstations-Funktionalitäten realisieren, wobei das Telekommunikationsnetz (100) des Weiteren eine zentrale Datenbankentität oder -funktionalität umfasst,
wobei, um das Telekommunikationsnetz (100) und/oder das Funkzugangsnetz (110) zu betreiben, und damit ein spezifischer erster Funkzugangsnetzknoten (1111) und ein spezifischer zweiter Funkzugangsnetzknotens (1121) miteinander interagieren, das Verfahren umfasst:
- in einem ersten Schritt sendet der spezifische erste Funkzugangsnetzknoten (1111) eine Fähigkeitsangabe-Nachricht, wobei die Fähigkeitsangabe-Nachricht Fähigkeitsinformationen umfasst, die sich auf die Fähigkeit des spezifischen ersten Funkzugangsnetzknotens (1111) beziehen oder diese angeben, und die zentrale Datenbankentität oder -funktionalität empfängt die Fähigkeitsangabe-Nachricht, die durch den spezifischen ersten Funkzugangsnetzknoten (1111) gesendet wurde,
- in einem zweiten Schritt empfängt der spezifische zweite Funkzugangsnetzknoten (1121) Fähigkeitsinformationen, die sich auf den spezifischen ersten Funkzugangsnetzknoten (1111) beziehen, wobei die Fähigkeitsinformationen, die sich auf den spezifischen ersten Funkzugangsnetzknoten (1111) beziehen, durch den spezifischen zweiten Funkzugangsnetzknoten (1121) von der zentralen Datenbankentität oder -funktionalität empfangen werden.

2. Verfahren nach Anspruch 1, wobei, als Teil des zweiten Schrittes, der spezifische zweite Funkzugangsnetzknoten (1121) die durch den spezifischen ersten Funkzugangsnetzknoten (1111) gesendete Fähigkeitsangabe-Nachricht empfängt, wobei der spezifische zweite Funkzugangsnetzknoten (1121) vor dem ersten Schritt eine Fähigkeitsangabe-Anforderungsnachricht an den spezifischen ersten Funkzugangsnetzknoten (1111) sendet,
wobei der spezifische erste Funkzugangsnetzknoten (1111) die Fähigkeitsangabe-Nachricht bei Detektieren des Vorhandenseins des spezifischen zweiten Funkzugangsnetzknotens (1121) oder als eine generische Multicast-Nachricht oder als eine Broadcast-Nachricht sendet.

3. Verfahren nach einem der vorangehenden Ansprüche, wobei die zentrale Datenbankentität oder -funktionalität eine Funkzugangsnetzinventar- und/oder -fähigkeitsnetzfunktion ist oder dieser entspricht.

4. Verfahren nach einem der vorangehenden Ansprüche, wobei im Fall einer Änderung der Fähigkeit des spezifischen ersten Funkzugangsnetzknotens (1111) eine modifizierte Fähigkeitsinformation durch den spezifischen ersten Funkzugangsnetzknoten (1111) gesendet wird,
wobei die Fähigkeitsangabe-Nachricht und/oder eine weitere Fähigkeitsangabe-Nachricht unterschiedliche Sätze von Fähigkeitsinformationen umfassen, wobei jeder unterschiedliche Satz von Fähigkeitsinformationen einen anderen Fähigkeitszustand des spezifischen ersten Funkzugangsnetzknotens (1111) darstellt, wobei unterschiedliche Fähigkeitszustände des spezifischen ersten Funkzugangsnetzknotens (1111) von mindestens einem von Folgendem abhängig sind:
- dem Standort des spezifischen ersten Funkzugangsnetzknotens (1111),
- einem spezifischen Zeitintervall oder einem sich wiederholenden Zeitintervall,
- einem lokalen oder allgemeinen oder netzweiten Parameter, der sich auf die lokale oder netzweite Netzlast bezieht.

5. Verfahren nach einem der vorangehenden Ansprüche, wobei die Fähigkeitsangabe-Nachricht unter Verwendung mindestens einer der folgenden Schnittstellen oder eines der folgenden Referenzpunkte gesendet wird:
- der 3GPP-Xn-Schnittstelle oder des 3GPP-Xn-Referenzpunktes,
- der ORAN E2-Schnittstelle oder des ORAN E2-Referenzpunktes,
wodurch ein automatischer Austausch von Fähigkeitsinformationen zwischen beteiligten Funkzugangsnetzknoten realisiert wird.

6. Verfahren nach einem der vorangehenden Ansprüche, wobei die Fähigkeitsinformationen gesendet werden und sich auf die Fähigkeit des spezifischen ersten Funkzugangsnetzknotens (1111) beziehen oder diese angeben sich auf die Kommunikations- und Funktionsmerkmalfähigkeiten
- im Allgemeinen oder
- in Bezug auf eine(n) oder mehrere spezifische Schnittstellen oder Referenzpunkte, Uu- und/oder Xn- und/oder NG-Schnittstellen oder -Referenzpunkte oder irgend eine andere logische Schnittstelle, die den Funkzugangsnetzknoten einbezieht,
beziehen.

7. Verfahren nach einem der vorangehenden Ansprüche, wobei die Form oder das Datenformat der Fähigkeitsinformationen mindestens einer der folgenden Formen oder einem der folgenden Datenformate entspricht:
- ASN.1, Abstract Syntax Notation One,
- XML, Extensible Markup Language,
- JSON, JavaScript Object Notation.

8. Verfahren nach einem der vorangehenden Ansprüche, wobei Funkzugangsnetzknoten der mehreren Funkzugangsnetzknoten und die spezifischen ersten und zweiten Funkzugangsnetzknoten (1111, 1121) einer Funktionalität oder mehreren Funktionalitäten von Folgendem entsprechen oder dieses realisieren:
- Funkzugangskoordinatoreinheit,
- zentrale Basisstationseinheit,
- verteilte Basisstationseinheit,
- Basisstationsfunkeinheit,
wobei eine solche Funktionalität oder solche Funktionalitäten mit einem von Folgendem in Beziehung gebracht werden oder eines von Folgendem verarbeiten können:
- Benutzerebenennachrichten oder Benutzerebenenkommunikation,
- Steuerungsebenennachrichten oder Steuerungsebenenkommunikation, oder
- sowohl Benutzerebenen- und Steuerungsebenennachrichten als auch Benutzerebenen- und Steuerungsebenenkommunikation.

9. System oder Telekommunikationsnetz (100) zum Betreiben des Telekommunikationsnetzes (100), das ein Funkzugangsnetz (110) umfasst, wobei das Funkzugangsnetz (110) mehrere Funkzugangsnetzknoten umfasst, die in der Lage sind zu interagieren, um Kommunikationsdienste für Benutzerausrüstungen (20) bereitzustellen, die mit dem Telekommunikationsnetz (100) verbunden sind oder durch das Telekommunikationsnetz (100) bedient werden, wobei das Telekommunikationsnetz (100) des Weiteren eine zentrale Datenbankentität oder -funktionalität umfasst,
wobei die Funkzugangsnetzknoten, mindestens teilweise, Funkzugangskoordinatoreinheit-Funktionalitäten und/oder Basisstations-Funktionalitäten realisieren,
wobei, um das Telekommunikationsnetz (100) und/oder das Funkzugangsnetz (110) zu betreiben und damit ein spezifischer erster Funkzugangsnetzknoten (1111) und ein spezifischer zweiter Funkzugangsnetzknoten (1121) miteinander interagieren, das System oder das Telekommunikationsnetz (100) so eingerichtet ist, dass:
- der spezifische erste Funkzugangsnetzknoten (1111) eine Fähigkeitsangabe-Nachricht sendet, wobei die Fähigkeitsangabe-Nachricht Fähigkeitsinformationen umfasst, die sich auf die Fähigkeit des spezifischen ersten Funkzugangsnetzknotens (1111) beziehen oder diese angeben, wobei die zentrale Datenbankentität oder -funktionalität dazu eingerichtet ist, die Fähigkeitsangabe-Nachricht, die durch den spezifischen ersten Funkzugangsnetzknoten (1111) gesendet wurde, zu empfangen,
- der spezifische zweite Funkzugangsnetzknoten (1121) Fähigkeitsinformationen, die sich auf den spezifischen ersten Funkzugangsnetzknoten (1111) beziehen, empfängt, wobei der spezifische zweite Funkzugangsnetzknoten (1121) dazu eingerichtet ist, die Fähigkeitsinformationen, die sich auf den spezifischen ersten Funkzugangsnetzknoten (1111) beziehen, von der zentralen Datenbankentität oder -funktionalität zu empfangen.

10. Programm, umfassend einen computerlesbaren Programmcode, der, wenn er auf einem Computer oder in einem spezifischen ersten Funkzugangsnetzknoten (1111) oder in einem spezifischen zweiten Funkzugangsnetzknoten (1121) oder in einer zentralen Datenbankentität oder -funktionalität oder einer Funkzugangsnetzinventar- und/oder -fähigkeitsnetzfunktion oder teilweise in dem spezifischen ersten Funkzugangsnetzknoten (1111) und/oder teilweise in dem spezifischen zweiten Funkzugangsnetzknoten (1121) und/oder teilweise in der zentralen Datenbankentität oder -funktionalität oder der Funkzugangsnetzinventar- und/oder -fähigkeitsnetzfunktion ausgeführt wird, den Computer oder den spezifischen ersten Funkzugangsnetzknoten (1111) oder den spezifischen zweiten Funkzugangsnetzknoten (1121) oder die zentrale Datenbankentität oder -funktionalität oder die Funkzugangsnetzinventar- und -fähigkeitsnetzfunktion veranlasst, ein Verfahren nach jeweils einem der Ansprüche 1 bis 8 durchzuführen.

11. Computerlesbares Medium, umfassend Instruktionen, die, wenn sie auf einem Computer oder in einem spezifischen ersten Funkzugangsnetzknoten (1111) oder in einem spezifischen zweiten Funkzugangsnetzknoten (1121) oder in einer zentralen Datenbankentität oder -funktionalität oder einer Funkzugangsnetzinventar- und -fähigkeitsnetzfunktion oder teilweise in dem spezifischen ersten Funkzugangsnetzknoten (1111) und/oder teilweise in dem spezifischen zweiten Funkzugangsnetzknoten (1121) und/oder teilweise in der zentralen Datenbankentität oder -funktionalität oder der Funkzugangsnetzinventar- und/oder -fähigkeitsnetzfunktion ausgeführt werden, den Computer oder den spezifischen ersten Funkzugangsnetzknoten (1111) oder den spezifischen zweiten Funkzugangsnetzknoten (1121) oder die zentrale Datenbankentität oder -funktionalität oder die Funkzugangsnetzinventar- und/oder -fähigkeitsnetzfunktion veranlassen, ein Verfahren nach jeweils einem der Ansprüche 1 bis 8 durchzuführen.

## Revendications

1. Procédé pour exploiter un réseau de télécommunications (100) comprenant un réseau d'accès radio (110), dans lequel le réseau d'accès radio (110) comprend une pluralité de nœuds de réseau d'accès radio qui peuvent interagir afin de fournir des services de communication à des équipements d'utilisateurs (20) étant connectés au réseau de télécommunications (100) ou desservis par celui-ci,
dans lequel les nœuds de réseau d'accès radio réalisent, au moins partiellement, des fonctionnalités d'unité de coordination d'accès radio et/ou des fonctionnalités de station de base, le réseau de télécommunications (100) comprenant en outre une entité ou fonctionnalité de base de données centrale,
dans lequel, afin d'exploiter le réseau de télécommunications (100) et/ou le réseau d'accès radio (110) et afin qu'un premier nœud de réseau d'accès radio spécifique (1111) et qu'un second nœud d'accès radio spécifique (1121) interagissent l'un avec l'autre, le procédé comprend :
- dans une première étape, le premier nœud de réseau d'accès radio (1111) envoie un message d'indication de capacité, le message d'indication de capacité comprenant des informations de capacité associées à la capacité du premier nœud de réseau d'accès radio spécifique (1111) ou indiquant celle-ci, et l'entité ou la fonctionnalité de base de données centrale reçoit le message d'indication de capacité envoyé par le premier nœud de réseau d'accès radio spécifique (1111),
- dans une seconde étape, le second nœud de réseau d'accès radio spécifique (1121) reçoit des informations de capacité associées au premier nœud de réseau d'accès radio spécifique (1111), dans lequel les informations de capacité associées au premier nœud de réseau d'accès radio spécifique (1111) sont reçues, par le second nœud de réseau d'accès radio spécifique (1121), en provenance de l'entité ou de la fonctionnalité de base de données centrale.

2. Procédé selon la revendication 1, dans lequel, en tant que partie de la seconde étape, le second nœud de réseau d'accès radio spécifique (1121) reçoit le message d'indication de capacité envoyé par le premier nœud de réseau d'accès radio spécifique (1111), dans lequel le second nœud de réseau d'accès radio spécifique (1121) envoie, avant la première étape, un message de demande d'indication de capacité au premier nœud de réseau d'accès radio spécifique (1111), dans lequel le premier nœud de réseau d'accès radio spécifique (1111) envoie le message d'indication de capacité lors d'une détection de la présence du second nœud de réseau d'accès radio spécifique (1121) ou sous la forme d'un message de multidiffusion générique ou d'un message de diffusion.

3. Procédé selon l'une des revendications précédentes, dans lequel l'entité ou la fonctionnalité de base de données centrale est ou correspond à un inventaire de réseau d'accès radio et/ou une fonction de réseau de capacités.

4. Procédé selon l'une des revendications précédentes, dans lequel dans le cas d'un changement de la capacité du premier nœud de réseau d'accès radio spécifique (1111), une information de capacité modifiée est envoyée par le premier nœud de réseau d'accès radio spécifique (1111),
dans lequel le message d'indication de capacité et/ou un message d'indication de capacité supplémentaire comprend différents ensembles d'informations de capacité, dans lequel chaque ensemble différent d'informations de capacité représente un état de capacité différent du premier nœud de réseau d'accès radio spécifique (1111), dans lequel différents états de capacité du premier nœud de réseau d'accès radio spécifique (1111) sont dépendants d'au moins un des éléments suivants :
- l'emplacement du premier nœud de réseau d'accès radio spécifique (1111),
- un intervalle de temps spécifique ou un intervalle de temps répété,
- un paramètre local ou général ou de réseau, associé à la charge de réseau locale ou au niveau du réseau.

5. Procédé selon l'une des revendications précédentes, dans lequel le message d'indication de capacité est envoyé en utilisant au moins un parmi les interfaces ou points de référence suivants :
- l'interface ou le point de référence 3GPP Xn,
- l'interface ou le point de référence ORAN E2,
en réalisant ainsi un échange automatique d'informations de capacité entre des nœuds de réseau d'accès radio impliqués.

6. Procédé selon l'une des revendications précédentes, dans lequel les informations de capacité sont envoyées et associées à la capacité du premier nœud de réseau d'accès radio spécifique (1111) ou indiquant celle-ci se rapportent aux capacités en termes de communication et de caractéristiques
- en général ou
- concernant une interface ou un point de référence, ou une pluralité d'interfaces ou de points de référence spécifiques, d'interfaces ou de points référence Uu et/ou Xn et/ou NG, ou toute autre interface logique impliquant le nœud de réseau d'accès radio.

7. Procédé selon l'une des revendications précédentes, dans lequel la forme ou le format de données des informations de capacité correspond à au moins un parmi les formes ou les formats de données suivants :
- ASN.1 (Abstract Syntax Notation One),
- XML (Extensible Markup Language),
- JSON (JavaScript Object Notation).

8. Procédé selon l'une des revendications précédentes, dans lequel des nœuds de réseau d'accès radio de la pluralité de nœuds de réseau d'accès radio, et les premier et second nœuds de réseau d'accès radio spécifiques (1111, 1121) correspondent à une fonctionnalité ou une pluralité de fonctionnalités parmi les suivantes, ou réalisent celles-ci :
- unité de coordination d'accès radio,
- unité centralisée de station de base,
- unité distribuée de station de base,
- unité radio de station de base,
dans lequel une telle fonctionnalité ou de telles fonctionnalités peuvent être associées ou traiter l'un des éléments suivants :
- des messages de plan d'utilisateur ou une communication de plan d'utilisateur,
- des messages de plan de contrôle ou une communication de plan de contrôle, ou
- à la fois des messages de plan d'utilisateur et de plan de contrôle ou une communication de plan d'utilisateur et de plan de contrôle.

9. Système ou réseau de télécommunications (100) destiné à exploiter le réseau de télécommunications (100) comprenant un réseau d'accès radio (110),
dans lequel le réseau d'accès radio (110) comprend une pluralité de nœuds de réseau d'accès qui peuvent interagir afin de fournir des services de communication à des équipements d'utilisateurs (20) étant connectés au réseau de télécommunications (100) ou desservis par celui-ci, le réseau de télécommunications (100) comprenant en outre une entité ou fonctionnalité de base de données centrale,
dans lequel les nœuds de réseau d'accès radio réalisent, au moins partiellement, des fonctionnalités d'unité de coordination d'accès radio et/ou des fonctionnalités de station de base,
dans lequel, afin d'exploiter le réseau de télécommunications (100) et/ou le réseau d'accès radio (110) et afin qu'un premier nœud de réseau d'accès radio spécifique (1111) et qu'un second nœud de réseau d'accès radio spécifique (1121) interagissent l'un avec l'autre, le système ou le réseau de télécommunications (100) est configuré de telle sorte que :
- le premier nœud de réseau d'accès radio spécifique (1111) envoie un message d'indication de capacité, le message d'indication de capacité comprend des informations de capacité associées à la capacité du premier nœud de réseau d'accès radio spécifique (1111) ou indiquant celle-ci, dans lequel l'entité ou la fonctionnalité de base de données centrale est configurée pour recevoir le message d'indication de capacité envoyé par le premier nœud de réseau d'accès radio spécifique (1111),
- le second nœud de réseau d'accès radio spécifique (1121) reçoit des informations de capacité associées au premier nœud de réseau d'accès radio spécifique (1111), dans lequel le second nœud de réseau d'accès radio spécifique (1121) est configuré pour recevoir les informations de capacité associées au premier nœud de réseau d'accès radio spécifique (1111), en provenance de l'entité ou de la fonctionnalité de base de données centrale.

10. Programme comprenant un code de programme lisible par ordinateur qui, lorsqu'il est exécuté sur un ordinateur ou sur un premier nœud de réseau d'accès radio spécifique (1111) ou sur un second nœud de réseau d'accès radio spécifique (1121) ou sur une entité ou fonctionnalité de base de données centrale, un inventaire de réseau d'accès radio et/ou une fonction de réseau de capacités, ou en partie sur le premier nœud de réseau d'accès radio spécifique (1111) et/ou en partie sur le second nœud de réseau d'accès radio spécifique (1121) et/ou en partie sur l'entité ou la fonctionnalité de base de données centrale, l'inventaire de réseau d'accès radio et/ou la fonction de réseau de capacités, amène l'ordinateur ou le premier nœud de réseau d'accès radio spécifique (1111) ou le second nœud de réseau d'accès radio spécifique (1121) ou l'entité ou la fonctionnalité de base de données centrale, l'inventaire de réseau d'accès radio et la fonction de réseau de capacités, à mettre en œuvre un procédé selon l'une des revendications 1 à 8, respectivement.

11. Support lisible par ordinateur comprenant des instructions qui, lorsqu'elles sont exécutées sur un ordinateur ou sur un premier nœud de réseau d'accès radio spécifique (1111) ou sur un second nœud de réseau d'accès radio spécifique (1121) ou sur une entité ou fonctionnalité de base de donnée centrale, un inventaire de réseau d'accès radio et une fonction de réseau de capacités, ou en partie sur le premier nœud de réseau d'accès radio spécifique (1111) et/ou en partie sur le second nœud de réseau d'accès radio spécifique (1121) et/ou en partie sur l'entité ou la fonctionnalité de base de données centrale, l'inventaire de réseau d'accès radio et/ou la fonction de réseau de capacités, amène l'ordinateur ou le premier nœud de réseau d'accès radio spécifique (1111) ou le second nœud de réseau d'accès radio spécifique (1121) ou l'entité ou la fonctionnalité de base de données centrale, l'inventaire de réseau d'accès radio et/ou la fonction de réseau de capacités, à mettre en œuvre un procédé selon l'une des revendications 1 à 8, respectivement.
